(19) Europäisches Patentamt
European Patent Office
Office européen des brevets

(11) **EP 1 855 084 A2**

(12) **EUROPÄISCHE PATENTANMELDUNG**

(43) Veröffentlichungstag:
**14.11.2007 Patentblatt 2007/46**

(51) Int Cl.:
*G01B 11/04* (2006.01)

(21) Anmeldenummer: 07106896.9

(22) Anmeldetag: **25.04.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK YU**

(30) Priorität: **11.05.2006 DE 102006022108**

(71) Anmelder: **SIEMENS AKTIENGESELLSCHAFT
80333 München (DE)**

(72) Erfinder:
• **Schneider, Richard
82024, Taufkirchen (DE)**
• **Stockmann, Michael
83052, Bruckmühl (DE)**

(54) **Verfahren zur Bestimmung der Resthöhe eines Fahrdrahtes und Vorrichtungen zur Durchführung des Verfahrens**

(57) Bei einem Verfahren und einer Vorrichtung zur Bestimmung der Resthöhe (rh) eines Fahrdrahts (2) werden Messungen in geraden Streckenabschnitten, in denen sich der Fahrdraht in der Nähe der Gleismitte befindet, vorgenommen, um einen Korrekturwert für die Breite seitlicher Ablagerungen (5) an der Schleiffläche (4) zu bestimmen. Dabei wird auch auf die Anwesenheit von Rillen (3) korrigiert. Der so bestimmte Korrekturwert kann dazu verwendet werden, in den restlichen Streckenabschnitten aus der Breite der Schleiffläche (4) die Resthöhe (rh) zu bestimmen.

FIG 1

## Beschreibung

Die Erfindung betrifft ein Verfahren zur Bestimmung der Resthöhe eines Fahrdrahtes mit den Verfahrensschritten:

- Beleuchten des Fahrdrahtes mit einer Lichtquelle;
- Abbilden des Fahrdrahtes mit Hilfe einer Optik auf eine Sensoreinrichtung;
- Ermitteln eines Breitenmesswerts für die Breite der Schleiffläche aus einer Aufnahme der Schleiffläche des Fahrdrahts; und
- Berechnen der Resthöhe aus dem Breitenmesswert.

Die Erfindung betrifft ferner Vorrichtungen zur Durchführung des Verfahrens.

Ein derartiges Verfahren ist aus der EP 13 15 943 B1 bekannt. Bei dem bekannten Verfahren sind an den seitlichen Oberkanten eines Schienenfahrzeugs jeweils eine Kamera und eine Beleuchtungsvorrichtung angebracht. Mit Hilfe der Beleuchtungsvorrichtungen können die Flanken und die Schleiffläche des Fahrdrahts beleuchtet werden. Von den Kameras werden Bilder der beleuchteten Schleiffläche aufgenommen. Bei bekannter Sollgeometrie des Fahrdrahts ist es grundsätzlich möglich, aus den Bildern der Schleifflächen des Fahrdrahts die verbleibende Resthöhe des Fahrdrahts zu bestimmen.

Mit dem bekannten Verfahren und den bekannten Vorrichtungen ist es ferner möglich, den Zustand der Fahrleitung im laufenden Betrieb zu überwachen.

Dies ist notwendig, da sich die Dicke der Fahrdrähte durch die Schleifwirkung der an den Fahrdrähten anliegenden Stromabnehmer von Triebfahrzeugen verringert. Insbesondere bildet sich auf der Unterseite des Fahrdrahts eine Schleiffläche aus, aus deren Breite auf die verbleibende Resthöhe geschlossen werden kann, wenn der Fahrdraht ein Querschnittsprofil mit variierender Breite aufweist.

Ein Nachteil des bekannten Verfahrens ist, dass das Messergebnis durch seitliche Anlagerungen an die eigentliche Schleiffläche des Fahrdrahts verfälscht werden kann. Derartige Ablagerungen können durch den Abrieb von Fahrdraht und Stromabnehmer entstehen und weisen in der Regel ein hohen Kohleanteil auf, die von der Schleifkohle der Stromabnehmer herrührt. Da diese seitlichen Kohleablagerungen aufgrund des geringen Kontrasts mit optischen Mittel nicht von der eigentlichen metallischen Schleiffläche des Fahrdrahts unterschieden werden können, führen die seitlichen Ablagerungen zu teilweise erheblichen Messfehlern.

Weiterhin ist aus VAN GIGCH, J.M. u.a.: System zur Messung der Fahrdrahtdicke (ATON) der niederländischen Eisenbahn. In: Schienen der Welt, April 1991, Seite 20 bis 31 eine Vorrichtung und ein Verfahren bekannt, bei dem auf dem Dach eines Messwagens fünf nach oben gerichtete Kameras angeordnet sind, durch die die Breite der Schleiffläche des Fahrdraht oberhalb des Messwagens erfasst werden kann.

Auch bei diesem Verfahren wird das Messergebnis durch die seitlichen Kohleablagerungen an der Schleiffläche verfälscht.

Schließlich ist aus der DE 196 34 060 C1 eine weitere Vorrichtung zur Bestimmung der Resthöhe eines Fahrdrahts bekannt. Bei dieser Vorrichtung sind die optischen Elemente am Stromabnehmer eines Schienenfahrzeugs angebracht. Die optischen Elemente umfassen zwei seitlich unterhalb der Schleifleiste angebrachte Kameras sowie verschiedene Lichtquellen, die den Fahrdraht beleuchten. Die Kameras erfassen das von den Lichtquellen auf der gegenüberliegenden Seite ausgesandte und an der Schleiffläche reflektierte Licht sowie das von den jeweils benachbarten Lichtquellen ausgesandte und von den Flanken zurückgeworfene Licht. Anhand der Abbildung der Schleiffläche und der seitlichen Flanke des Fahrdrahts ist es grundsätzlich möglich, die wahre Resthöhe des Fahrdrahts unabhängig von der Breite seitlicher Ablagerungen zu bestimmen.

Ein Nachteil der bekannten Vorrichtung ist, dass der Fahrdraht vom Schleifer des Stromabnehmers berührt wird. Um kostengünstig zu arbeiten, werden auf modernen, von einem Dieselmotor angetriebenen Messfahrzeugen verschiedene Messungen am Gleis und an der Oberleitung während einer Fahrt gleichzeitig durchgeführt. So sollen unter anderem die Messung der Lage des Fahrdrahtes zum Gleis und die Messung der Resthöhe des Fahrdrahts zeitgleich durchgeführt werden. Die Messung der Fahrdrahthöhe über der Schienenoberkante muss berührungslos erfolgten, da ein Stromabnehmer, der von unten an den Fahrdraht drückt, diesen um mehrere Zentimeter anheben kann und so das Messergebnis der Drahtlagemessung verfälscht. Um einen störenden Einfluss auf die Messung der Drahtlage zu vermeiden, darf die Vorrichtung zur Bestimmung der Resthöhe des Fahrdrahts daher nur berührungslos arbeiten.

Ausgehend von diesem Stand der Technik liegt der Erfindung die Aufgabe zugrunde, ein hinsichtlich der Messgenauigkeit verbessertes Verfahren zur Bestimmung der Resthöhe von Fahrdrähten zu schaffen. Der Erfindung liegt ferner die Aufgabe zugrunde, Vorrichtungen zur Durchführung des Verfahrens anzugeben.

Diese Aufgaben werden durch ein Verfahren und die Vorrichtungen mit den Merkmalen der unabhängigen Ansprüche gelöst. In davon abhängigen Ansprüchen sind vorteilhafte Ausgestaltungen und Weiterbildung angegeben.

Bei dem Verfahren wird zunächst anhand der Aufnahme einer Flanke und der Schleiffläche des Fahrdrahts, die in ausgewählten Streckenabschnitten durchgeführt worden sind, ein wahrer Breitenmesswert für die Breite der Schleifffläche bestimmt. Durch Vergleich zwischen dem wahren Breitenmesswert und dem in diesem Streckenabschnitt aus der Aufnahme der Schleifffläche ermitteltem scheinbaren Breitenmesswert kann dann ein Korrekturwert für die Breite der Ablagerungen am Fahrdraht ermittelt werden. Außerhalb der ausgewählten Streckenabschnitte kann dann vor dem Berechnen der Resthöhe der aus der Aufnahme der Schleifffläche ermittelte scheinbare Breitenmesswert mit Hilfe des Korrekturwerts korrigiert werden. Auf diese Weise ist es möglich, die Resthöhe eines Fahrdrahts entlang der gesamten Messlänge mit verbesserter Genauigkeit zu bestimmen.

Bei einer bevorzugten Ausführungsform wird von dem aus der Aufnahme der Schleifffläche ermittelten scheinbaren Breitenmesswert ein Korrekturwert subtrahiert, der eine Funktion des scheinbaren Breitenmesswerts ist. Da die seitlichen Ablagerungen um so breiter sind, je länger der Fahrdraht benutzt wird, besteht ein Zusammenhang zwischen der Breite der seitlichen Ablagerungen und der wahren oder scheinbaren Breite der Schleifffläche. Dieser Zusammenhang kann empirisch bestimmt werden, indem geeignete Anpassungsfunktionen an die Messwerte angepasst werden.

Der Zusammenhang zwischen Breitenmesswert und Korrekturwert kann in einem Datenspeicher abgespeichert sein. Daneben ist es möglich, den Zusammenhang zwischen Korrekturwert und Breitenmesswert dynamisch zu überwachen, was den Vorteil bietet, dass unerwartete Abweichungen vom empirisch ermittelten Zusammenhang erkennbar werden.

Vorzugsweise wird der Korrekturwert in geraden Streckenabschnitten ermittelt, in denen sich der Fahrdraht im Bereich der Gleismitte befindet. Dies ist insofern von Vorteil, als die im oberen Bereich des Fahrdrahts ausgebildete Rille, die der Aufhängung des Fahrdrahtes dient, das Messergebnis verfälschen kann. Denn in der Praxis ist es so, dass der Fahrdraht zwischen den Befestigungspunkten an den Quertragewerken um seine Längsachse verdrillt ist. Die Winkellage der Rille ist daher nicht bekannt. Insbesondere im Bereich von Kurven kann die Winkellage der Rille kaum vorhergesagt werden. Da die Winkellage der Rille aber das Bild der Flanke beeinflusst, die Winkellage der Rille jedoch nicht bekannt ist, kann das Messergebnis hinsichtlich der Lage der Rille nicht ohne weiteres korrigiert werden. Die Folge sind systematische Messfehler, die das Messergebnis verfälschen. Es hat sich nun herausgestellt, dass in geraden Streckenabschnitten die Symmetrieachse des Querschnittsprofils des Fahrdrahts im Wesentlichen gleich der Senkrechten ist, sodass der Einfluss der im Fahrdraht ausgebildete Rillen bei der Bestimmung der wahren Resthöhe des Fahrdrahts und damit des wahren Breitenwerts der Schleifffläche eliminiert werden kann.

Vorzugsweise wird der Korrekturwert gebildet, indem an verschiedenen geraden Streckenabschnitten aufgenommene Korrekturwerte gemittelt werden. Dadurch können verbleibende Messungenauigkeiten, die insbesondere durch Schwankungen in der Winkellage der Rillen hervorgerufen werden, herausgemittelt werden.

Eine Vorrichtung zur Bestimmung der Resthöhe eines Fahrdrahts, die zur Ausführung des Verfahrens geeignet ist, verfügt über eine Lichtquelle zur Beleuchtung einer Schleifffläche des Fahrdrahtes und ist mit einer Optik ausgestattet, mit der sich die Schleifffläche des Fahrdrahts auf eine Sensoreinrichtung abbilden lässt. Der Sensoreinrichtung ist eine Auswerteeinheit nachgeschaltet, durch die aus einer Aufnahme des Fahrdrahts ein Breitenmesswert für die Breite der Schleifffläche und aus dem Breitenmesswert die Resthöhe des Fahrdrahts bestimmbar ist. Die Auswerteeinheit ist ferner zur Korrektur des Breitenmesswerts der Schleifffläche mit Hilfe eines vorbestimmten Korrekturwerts für die Breite seitlicher Ablagerungen am Fahrdraht eingerichtet.

Eine derartige Vorrichtung ist dazu in der Lage, aus der Aufnahme der Schleifffläche eines Fahrdrahtes die verbleibende Resthöhe des Fahrdrahtes zutreffend zu bestimmen, denn für die Aufnahme der Schleifffläche des Fahrdrahts ist die Winkellage der Rille im Fahrdraht ohne Bedeutung. Da die Strecken für Schienenfahrzeuge in der Regel über lange Zeit mit einer bestimmten Art von Schienenfahrzeugen betrieben werden, können vorab streckenabhängige Korrekturfaktoren bestimmt werden, durch die sich der Breitenmesswert für die Breite der Schleifffläche korrigieren lässt.

Vorzugsweise umfasst die Vorrichtung wenigstens zwei seitlich unterhalb des Fahrdrahts auf gegenüberliegenden Seiten des Schienenfahrzeugs montierte Lichtquellen sowie zwei in der Nähe der Lichtquellen montierte Kameras. Durch die Kameras wird jeweils das von der Flanke des Fahrdrahts und der Schleifffläche zurückgeworfene Licht erfasst. Mit einer derartigen Vorrichtung kann die Seiten- und Höhenlage des Fahrdrahts durch Triangulation bestimmt werden. Außerdem kann mit der Vorrichtung auch der Korrekturwert vorab bestimmt werden.

Eine Vorrichtung zur Bestimmung eines Korrekturwerts für die Breite seitlicher Ablagerungen an den Schleiff-flächen eines Fahrdrahts umfasst eine Lichtquelle zur Beleuchtung einer Schleifffläche und einer Flanke des Fahrdrahts sowie eine Optik zur Abbildung der Flanke und der Schleifffläche auf eine Sensoreinrichtung sowie eine der Sensoreinrichtung nachgeschaltete Auswerteeinheit, durch die aus einer Aufnahme der Flanke und der Schleifffläche des Fahrdrahts ein von der Breite seitlicher Ablagerungen unabhängiger wahrer Resthöhenwert bestimmbar ist. Ferner ist durch die Auswerteeinheit aus dem wahren Resthöhenwert ein wahrer Breitenmesswert für die Schleifffläche errechenbar, aus dem durch Vergleich mit einem anhand der Aufnahme der Schleifffläche ermittelten scheinbaren Breitenmesswert der Korrekturwert für die Breite der seitlichen Ablagerung ermittelbar ist.

Vorzugsweise ist die Vorrichtung zur Bestimmung eines Korrekturwertes dazu eingerichtet, entlang geraden Strecken Daten zu nehmen, wenn sich der Fahrdraht in einer mittleren Lage oberhalb des Gleises befindet. In diesem Fall ist die Winkellage der Rille am Fahrdraht zumindest näherungsweise bekannt, sodass der Einfluss der Rille auf das Ergebnis bei der Bestimmung des Korrekturwerts reduziert werden kann.

Vorzugsweise umfasst die Vorrichtung zur Bestimmung des Korrekturwerts zwei unterhalb des Fahrdrahts auf gegenüberliegenden Seiten des Schienenfahrzeugs angeordnete Lichtquellen sowie zwei in der Nähe der Lichtquellen angeordnete Sensoren. Mit dieser Anordnung der Lichtquellen und Sensoren ist es möglich, beide Flaken des Fahrdrahts zu beleuchten und zusammen mit der Schleiffläche zu erfassen. In diesem Fall können die Aufnahmen beider Flanken zur Bestimmung der Resthöhe herangezogen werden und dadurch das Ergebnis der Bestimmung des Korrekturwerts überprüft oder durch Mittelung verbessert werden.

Weitere Vorteile und Eigenschaften der Erfindung gehen aus der nachfolgenden Beschreibung hervor, in der Ausführungsbeispiele der Erfindung anhand der beigefügten Zeichnung im Einzelnen erläutert werden. Es zeigen:

Figur 1    den Aufbau einer Vorrichtung zur Bestimmung der Resthöhe eines Fahrdrahts;

Figur 2    eine Querschnittsansicht eines Fahrdrahts, in die verschiedene Größen des bei der Bestimmung der wahren Resthöhe angewandten Verfahrens eingetragen sind;

Figur 3    eine Querschnittsansicht, die der Veranschaulichung einer Rillenkorrektur dient; und

Figur 4    ein Diagramm zur Bestimmung der Breite von seitlichen Ablagerungen, die die scheinbare Schleiffläche vergrößern.

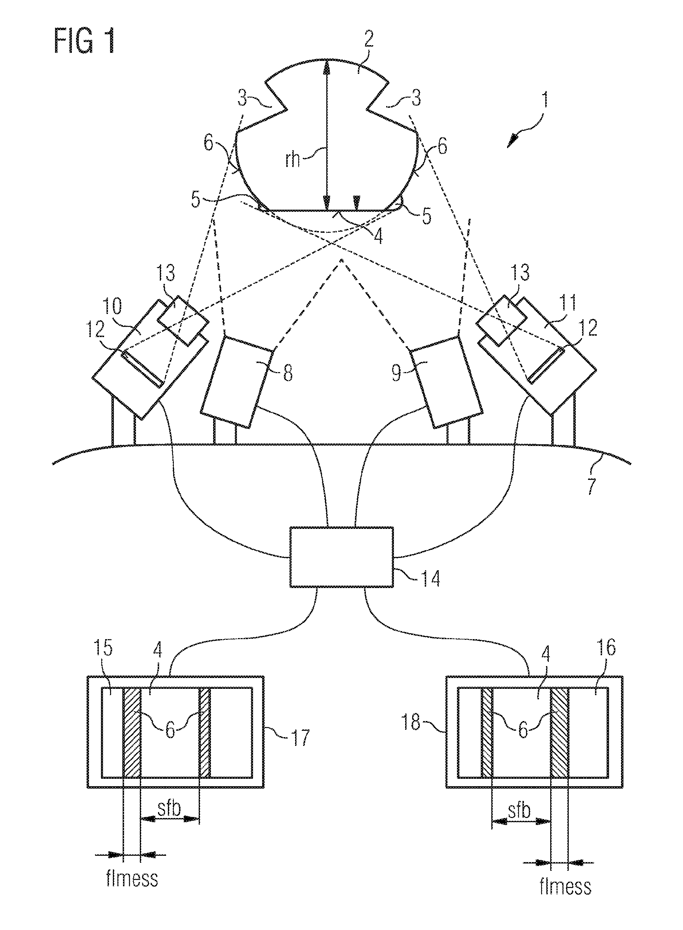

Figur 1 zeigt den Aufbau einer Messvorrichtung 1, die der Bestimmung der Resthöhe rh eines Fahrdrahts 2 dient. Der Fahrdraht 2, der in der Regel einen kreisförmigen Querschnitt aufweist, verfügt über seitliche Rillen 3, mit denen der Fahrdraht 2 an Quertragewerken angebracht werden kann. Um die Stromabnehmer gleichmäßig abzunützen, ist der Fahrdraht 2 im Allgemeinen von Quertragewerk zu Quertragewerk zickzackförmig aufgespannt. Derartige Quertragewerke sind beispielsweise an Oberleitungsmasten angebrachte Ausleger, an denen oberhalb der Fahrdrähte verlaufende Trageseile angebracht sind. Der Fahrdraht 2 ist über so genannte Hänger mit dem Trageseil verbunden und kann auch an den Auslegern auf geeignete Weise befestigt sein. Durch den Kontakt der Stromabnehmer von elektrischen Triebfahrzeugen mit der Unterseite des Fahrdrahts 2 entsteht mit der Zeit eine Schleiffläche 4, die durch seitliche Ablagerungen 5 verbreitert sein kann. Die seitlichen Ablagerungen 5 entstehen durch den Abrieb des Fahrdrahts 2 und der Schleifer der Stromabnehmer und enthalten in der Regel einen erheblichen Kohleanteil. Der Fahrdraht 2 verfügt ferner über seitliche Flanken 6, die mit den Stromabnehmern nicht in Berührung stehen.

Die Messvorrichtung 1 ist auf einem Dach 7 eines Schienenfahrzeugs montiert und umfasst seitlich unterhalb des Fahrdrahts 2 angeordnete Lichtquellen 8 und 9, denen jeweils Kameras 10 und 11 zugeordnet sind.

Bei den Kameras 10 und 11 handelt es sich um digitale Kameras, die mit einem photoelektrischen Flächendetektor 12 ausgestattet sind. An Stelle der Flächendetektoren 12 können auch Zeilendetektoren verwendet werden.

Ferner verfügen die Kameras 10 und 11 über jeweils eine Optik 13, durch die die Schleiffläche 4 und die Flanken 6 des Fahrdrahts 2 auf die Flächendetektoren 12 der Kameras 10 und 11 abgebildet werden. Die Optik 13 ist jeweils nach der so genannten Scheimpflug-Regel ausgerichtet, sodass die Kameras 10 und 11 die Schleiffläche 4 und die Flanken 6 unabhängig von der Zickzack-Bewegung des Fahrdrahtes 2 scharf abbilden.

Bei den Lichtquellen 8 und 9 handelt es sich vorzugsweise um Laserlichtquellen.

Den Kameras 10 und 11 ist eine Auswerteeinheit 14 nachgeschaltet, die aus aufgenommenen Bildern 15 und 16 der Schleiffläche 4 und der Flanken 6 einen scheinbaren Breitenmesswert sfb für die Breite der Schleiffläche 4 und einen Flankenmesswert flmess bestimmt. Gemäß Figur 1 können die von den Kameras 10 und 11 aufgenommenen Bildern 15 und 16 des Fahrdrahts 2 an Monitoren 17 und 18 angezeigt werden.

Es sei angemerkt, dass der Flankenmesswert flmess jeweils anhand des Bildes der der jeweiligen Kamera 10 oder 11 zugewandten Flanke 6 bestimmt wird, da das Bild der der Kamera 10 oder 11 abgewandten Flanke 6 des Fahrdrahts 2 sehr stark von den geometrischen Verhältnissen abhängt. Bei starker Abnutzung des Fahrdrahts 2 kann beispielsweise der Fall eintreten, dass das Bild der abgewandten Flanke 6 aus den Bildern 15 und 16 verschwindet.

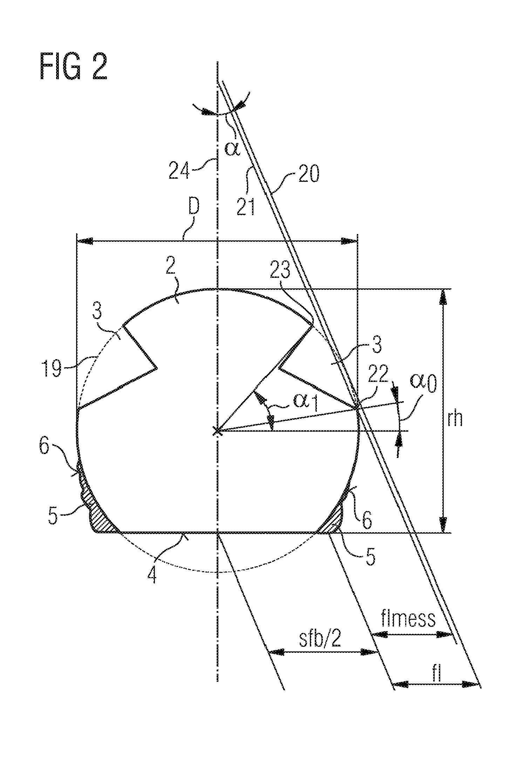

Aus dem scheinbaren Breitenmesswert sfb für die Breite der Schleiffläche 4 und aus dem Flankenmesswert flmess kann grundsätzlich die wahre Resthöhe rh bestimmt werden. Dies sei im Folgenden anhand Figur 2 näher erläutert.

Figur 2 zeigt einen Querschnitt durch den Fahrdraht 2. Der Fahrdraht 2 weist einen kreisförmigen Umriss 19 mit einem Durchmesser D auf. Bei bekanntem scheinbaren Breitenmesswert sfb und bei einem bekannten Flankenwert fl ergibt sich die Resthöhe rh des Fahrdrahts 2 aus der Formel:

$$rh = \frac{D}{2}\left(1 - \frac{1}{\sin a}\right) + \frac{\frac{sfb}{2} + fl}{\tan \alpha} \qquad (1)$$

fl ist dabei der Flankenwert, der sich ergeben würde, wenn in Fahrdraht 2 keine Rille 3 eingeprägt wäre. In diesem Fall wird der Flankenwert fl von einer Tangente 20 an den Umriss 19 bestimmt. Der Winkel $\alpha$ ergibt sich aus einer von der Messvorrichtung 1 durchgeführten Triangulation zur Ermittlung der Höhen- und Seitenlage des Fahrdrahts 2 in Bezug auf das Dach 7 des Schienenfahrzeugs.

In der Praxis wird jedoch der Flankenmesswert flmess erfasst, der durch eine Tangente 21 an eine untere Kante 22 der Rille 3 bestimmt wird. Eine obere Kante 23 der Rille 3 spielt dagegen bei der Bestimmung des Flankenmesswerts in der Regel keine Rolle, da die obere Kante 23 von der unteren Kante 22 abgeschattet wird.

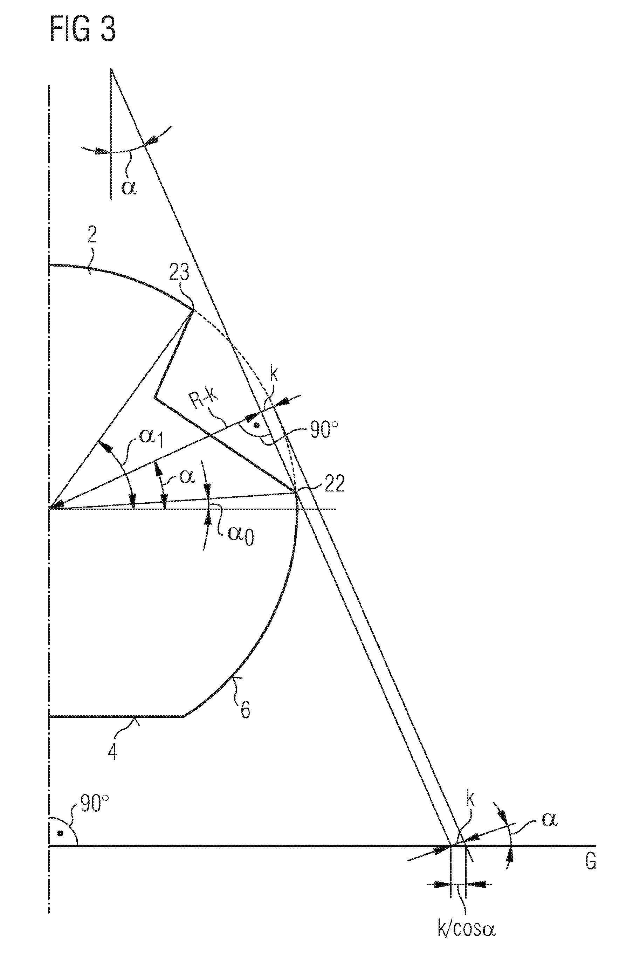

Wenn der Drehwinkel $\varphi$ zwischen einer Symmetrieachse 24 des Fahrdrahtes 2 und einer Senkrechten bekannt ist, kann der Flankenmesswert flmess auf den Flankenwert fl korrigiert werden. Dazu sei Figur 3 betrachtet, in der der Fall dargestellt ist, dass $\varphi = 0$ gilt. $\alpha_0$ sei dabei die Winkellage der unteren Kante 22 und $\alpha_1$ die Winkellage der oberen Kante 23. Sowohl $\alpha_0$ als auch $\alpha_1$ sind in Figur 3 auf die Horizontale bezogen und geben jeweils den Winkel an, unter dem die untere Kante 22 und die obere Kante 23 vom Mittelpunkt des Fahrdrahtes 2 aus erscheinen.

Gesucht ist die Differenz $\Delta = fl - flmess$. Die Differenz $\Delta$ ist gleich der Projektion der Strecke k auf die Grundlinie G. Es gilt also $\Delta = fl - flmess - k / \cos \alpha$, wobei k die Höhe des aufgrund der Rille 3 fehlendes Kreissegments ist. Ferner gilt der Zusammenhang: $\cos(\alpha-\alpha_0) = 1-k/R$, wobei R der Radius des Fahrdrahtes 2 ist. Wenn die Winkellage $\alpha_0$ der unteren Kante 22 bekannt ist, kann dann aus dem Flankenmesswert flmess der Flankenwert fl für den Fall dass $\alpha_0 \leq \alpha \leq \alpha_1$ gilt, berechnet werden:

$$fl = flmess + \frac{D}{2}\frac{(1 - \cos(\alpha - \alpha_0))}{\cos \alpha} \qquad (2)$$

In der Praxis ist es allerdings so, dass der die Winkellage des Fahrdrahts 2 beschreibende Winkel $\varphi$ nicht bekannt ist, da sich der Fahrdraht 2 zwischen aufeinander folgenden Quertrageeinrichtungen um seine Längsachse hin- und herdreht. Dies ist bereits bei geraden Streckenabschnitten der Fall. In gekrümmten Streckenabschnitten ist eine Vorhersage der Winkellage erst recht nicht möglich.

In der Praxis ist es daher nicht möglich, aus dem scheinbaren Breitenmesswert sfb der Schleiffläche 4 und dem Flankenmesswert flmess entlang dem gesamten Fahrdraht 2 die Resthöhe rh des Fahrdrahts 2 mit einer Genauigkeit von unterhalb einem Prozent zu bestimmen. Für die Bestimmung der Resthöhe rh wird daher ausschließlich ein hinsichtlich der Breite der seitlichen Ablagerungen 5 korrigierter Breitenmesswert der Schleiffläche 4 herangezogen. Bei einem kreisförmigen Querschnitt des Fahrdrahts 2 gilt nämlich:

$$rh = \frac{D}{2}\left(1 + \sqrt{1 - \left(\frac{sfb - cw}{D}\right)^2}\right) \qquad (3)$$

wobei cw der Korrekturwert für die Breite der seitlichen Ablagerungen 5 ist. Gleichung (3) beschreibt den Zusammenhang zwischen der Resthöhe rh und der wahren Breite sfb - cw der Schleiffläche 4 unter der Vorraussetzung, dass der Fahrdraht 2 einen kreisförmigen Querschnitt aufweist.

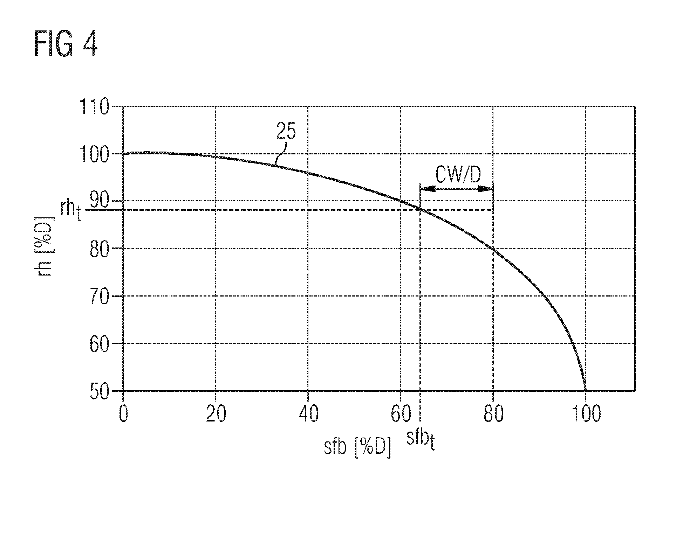

Der Korrekturwert cw wird dabei in Streckenabschnitten bestimmt, in denen die Winkellage des Fahrdrahts 2 bekannt ist oder in denen zu erwarten ist, dass der Fahrdraht 2 eine bestimmte Winkellage einnimmt. Derartige Strek-kenabschnitte sind beispielsweise gerade Streckenabschnitte, in denen sich der Fahrdraht 2 nahe der Gleismitte befindet. Dabei handelt es sich also um Streckenabschnitte fern der Aufhängungen des Fahrdrahtes an den Quertrageeinrichtun-gen. In diesen Streckenabschnitten kann dann gemäß Gleichung (1) aus dem Breitenmesswert sfb und dem Flankenmesswert flmess nach einer Rillenkorrektur gemäß Gleichung (2) die wahre Resthöhe $rh_t$ bestimmt werden. Die auf diese Weise bestimmte wahre Resthöhe $rh_t$ kann in ein Diagramm von der in Figur 4 dargestellten Art eingetragen werden.

In Figur 4 zeigt eine Kurve 25 den prozentualen auf den Durchmesser D bezogenen Verlauf der Resthöhe $rh_t$ in Abhängigkeit von dem prozentualen auf den Durchmesser bezogenen Breitenmesswert sfb unter der Vorraussetzung,

dass keine seitlichen Ablagerungen 5 das Messergebnis verfälschen, dass also cw = 0 gilt. Die Kurve 25 veranschaulicht somit Gleichung (3) mit cw = 0. Anhand von Kurve 25 kann auch die wahre Breite $sfb_t$/D abgelesen werden, die der wahren Resthöhe $rh_t$/D zuzuordnen ist. Die Differenz zwischen der zu erwartenden wahren Breite $sfb_t$/D der Schleiffläche 4 und dem scheinbaren Breitenmesswert sfb/D ergibt den auf den Durchmesser D bezogenen Korrekturwert cw/D, der auch dann zur Korrektur des Breitenmesswerts sfb der Schleiffläche 4 verwendet werden kann, wenn die Winkellage des Fahrdrahts 2 nicht bekannt ist.

Versuche haben gezeigt, dass der Korrekturwert cw vom Breitenmesswert sfb abhängt. Der Zusammenhang kann durch eine empirisch ermittelte Funktion beschrieben werden:

$$cw = a0 + a1 \cdot sfb + a2 \cdot (sfb)^2 + ... \qquad (4)$$

Es hat sich herausgestellt, dass in der Regel nur die Parameter a0 und a1 von 0 verschieden sind. Der Korrekturwert cw ist somit eine lineare Funktion des Breitenmesswerts sfb. Ein Zusammenhang dieser Art ist auch zu erwarten, da die Ablagerungen 5 um so breiter sind, je breiter die Schleiffläche 4 ist, da sowohl die Breite der Schleiffläche 4 als auch die Breite der Ablagerungen 5 von der Betriebsdauer des Fahrdrahts 2 abhängen.

Es genügt vor regelmäßigen Messfahrten auf einer bestimmten Strecke einmalig die Parameter von Gleichung (3) zu ermitteln oder von vergleichbaren Strecken zu übernehmen. Während der regelmäßigen Messfahrten dient Gleichung (3) dazu, den aktuell gemessenen Breitenmesswert sfb hinsichtlich der Breite der Ablagerungen 5 zu korrigieren.

Grundsätzlich ist es auch möglich, die Korrekturwerte cw dynamisch zu ermitteln. Bei einer Ermittlung der Resthöhe rh in Echtzeit kann es jedoch im Bereich der Fahrdrahtwechsel zu Ungenauigkeiten kommen, da dort Fahrdrähte beginnen und enden. Fahrdrähte, die entlang einer Strecke aufeinander folgen, können einen unterschiedlichen Abnutzungsgrad aufweisen, sodass die Vorrichtung zur dynamischen Ermittlung der Korrekturwerts cw in der Lage sein muss, plötzliche Sprünge der Korrekturwerte zu erkennen. Dies ist jedoch nicht ohne weiteres möglich, da gerade im Bereich der Fahrdrahtwechsel die Winkellage der Rillen 3 nicht bekannt ist. Bei einer Ermittlung der Resthöhe rh in Echtzeit können daher im Bereich der Spannwerke Ungenauigkeiten auftreten. Wenn dagegen der jeweils geltende Korrekturwert für einen zwischen zwei aufeinander folgenden Spannwerken verlaufenden Fahrdraht bestimmt und die Resthöhe rh retrospektiv berechnet wird, kann darauf verzichtet werden, vorab durch eine separate Messfahrt einen Zusammenhang von der Art der Gleichung (4) zu ermitteln.

In der Praxis ist es allerdings von Vorteil, wenn zunächst vor der Durchführung der eigentlichen Messfahrt eine erste Messfahrt durchgeführt wird, in der die Parameter der Korrekturfunktion gemäß Gleichung (3) bestimmt werden und wenn in den eigentlichen Messfahrten, die einmal bestimmten Parameter nicht mehr verändert werden. Dies gilt allerdings nur, solang die Strecke mit einer bestimmten Art von Triebfahrzeugen befahren wird. Wenn beispielsweise die Strecke vom Wechselstrombetrieb in Gleichstrombetrieb umgestellt wird oder neue Triebfahrzeuge mit Stromabnehmern aus einem wesentlich anderem Schleifmaterial auf der Strecke zum Einsatz kommen, kann es notwendig sein, die empirisch ermittelte Funktion gemäß Gleichung (4) neu zu bestimmen.

Es sei angemerkt, dass die Parameter der Korrekturfunktion vorzugsweise durch Mittelung von Messungen an geeigneten Streckenabschnitten oder durch Anpassung einer Ausgleichsfunktion an die Messwerte bestimmt werden.

Die Fehlerkorrektur mit Hilfe der Korrekturfunktion für die Breite der Ablagerungen 5 trägt wesentlich zur Verbesserung der Genauigkeit bei, da sich ohne die Korrekturfunktion erhebliche Fehler ergeben. Dies sei an einem Zahlenbeispiel erläutert.

Bei einer Breite der Schleiffläche 4, die 80 % des Durchmessers D des Fahrdrahts 2 beträgt, ergibt sich beispielsweise ohne Berücksichtigung der Korrekturfunktion eine Resthöhe rh = 0,80 D. Da aber bei einer Breite der Schleiffläche von 80 % des Durchmessers D Kohlestreifen oder Ablagerungen mit einer Gesamtbreite von etwa 22 % des Durchmessers D zu erwarten sind, sollte die wahre Breite der Schleiffläche 4 nur etwa 58 % des Durchmessers D betragen. Einer wahren Breite der Schleiffläche 4 von nur etwa 58 % des Durchmessers ist aber eine Resthöhe von rh = 0,91 D zuzuordnen. Ohne die Anwendung des Korrekturwertes ergibt sich somit ein Fehler von etwa zehn Prozent, der weit oberhalb des geforderten Fehlers von maximal einem Prozent liegt.

Das Verfahren wurde hier am Beispiel eines Fahrdrahts 2 mit kreisförmigem Querschnitt beschrieben. Das Verfahren kann jedoch entsprechend modifiziert auch auf Fahrdrähte mit anderen Querschnitten angewandt werden, sofern der Querschnitt des Fahrdrahts aus der Breite der Schleiffläche einen Rückschluss auf die Resthöhe des Fahrdrahts erlaubt.

Ferner ist es möglich, getrennte Systeme für die Bestimmung der Korrekturfunktion und die eigentliche Überwachung der Resthöhe vorzusehen. Beispielsweise ist es möglich, für die regelmäßige Überwachung ein System vorzusehen, bei dem die Schleiffläche 4 mit Hilfe einer einzelnen Kamera überwacht wird. In diesem Fall können weitere Vorrichtungen zur Bestimmung der Höhen- und Seitenlage des zu untersuchenden Fahrdrahts notwendig sein. Für die Bestimmung der Korrekturfunktion kann dagegen ein weiteres System vorgesehen sein, bei dem die Schleiffläche 4 und die Flanken 6 mit wenigsten zwei Kameras erfasst werden.

Ferner ist es möglich, die Rillenkorrektur auch durch eine Bewertung der Flankenbilder vorzunehmen. Wenn einer der beiden Flankenmesswerte zu einer größeren Resthöhe als der andere Flankenmesswert führt, ist zu vermuten, dass das jeweilige Flankenbild nicht durch die Anwesenheit einer Rille beeinträchtigt ist. In diesem Fall kann der Flankenmesswert, der zu einer größeren Resthöhe führt, für die Berechnung der Resthöhe herangezogen werden, während der andere Flankenmesswert verworfen wird.

**Patentansprüche**

1. Verfahren zur Bestimmung der Resthöhe(rh) eines Fahrdrahts (2) mit den Verfahrensschritten:

   - Beleuchten des Fahrdrahts(2) mit einer Lichtquelle (8);
   - Abbilden des Fahrdrahts (2) mit Hilfe einer Optik (13) auf eine Sensoreinrichtung (12);
   - Ermitteln eines Breitenmesswerts (sfb) für die Breite der Schleiffläche (4) aus einer Aufnahme der Schleiffläche (4) des Fahrdrahts (2);
   - Berechnen der Resthöhe (rh) aus dem Breitenmesswert (sfb),

   **dadurch gekennzeichnet, dass**

   anhand der Aufnahme einer Flanke (6) und der Schleiffläche (4) in ausgewählten Streckenabschnitten ein wahrer Breitenmesswert (sfb$_t$) bestimmt wird, aus dem durch Vergleich mit dem in diesem Streckenabschnitt aus der Aufnahme der Schleiffläche (4) ermittelten Breitenmesswert (sfb) ein Korrekturwert (cw) ermittelt wird und dass vor dem Berechnen der Resthöhe (rh) der aus der Aufnahme der Schleiffläche (4) ermittelte Breitenmesswert (sfb) mit Hilfe des Korrekturwerts (cw) korrigiert wird.

2. Verfahren nach Anspruch 1,
   **dadurch gekennzeichnet, dass**
   der Breitenmesswert (sfb) mit Hilfe eines streckenspezifischen Korrekturwerts korrigiert wird.

3. Verfahren nach Anspruch 1 oder 2,
   **dadurch gekennzeichnet, dass**
   der Korrekturwert (cw) mit Hilfe einer Korrekturwertfunktion in Abhängigkeit vom Breitenmesswert (sfb) bestimmt wird.

4. Verfahren nach Anspruch 3,
   **dadurch gekennzeichnet, dass**
   Parameter der Korrekturwertfunktion (cw) vorab vor der Durchführung von Messfahrten zur Bestimmung der Resthöhe (rh) des Fahrdrahts (2) bestimmt werden.

5. Verfahren nach Anspruch 3,
   **dadurch gekennzeichnet, dass**
   Parameter der Korrekturwertfunktion (cw) dynamisch während einer Messfahrt zur Bestimmung der Resthöhe (rh) des Fahrdrahts (2) überwacht werden.

6. Verfahren nach einem der Ansprüche 3 bis 5,
   **dadurch gekennzeichnet, dass**
   die Messungen zur Bestimmung der Korrekturwertfunktion (cw) an geraden Streckenabschnitten durchgeführt werden, in denen sich der Fahrdraht (2) in der Nähe der Gleismitte befindet.

7. Verfahren nach Anspruch 6,
   **dadurch gekennzeichnet, dass**
   bei den Messungen zur Bestimmung der Korrekturwertfunktion (cw) eine Rillenkorrektur durchgeführt wird, indem ein Flankenmesswert (flmess) auf einen wahren, einem rillenfreien Umriss (19) des Fahrdrahtes (2) entsprechenden Flankenwert (fl) korrigiert wird.

8. Verfahren nach Anspruch 6 oder 7,
   **dadurch gekennzeichnet, dass**
   die Parameter der Korrekturwertfunktion durch Anpassung einer Ausgleichsfunktion an in verschiedenen Streckenabschnitten aufgenommene Messwerte ermittelt werden.

9. Vorrichtung zur Bestimmung der Resthöhe (rh) eines Fahrdrahts (2) mit einer Lichtquelle (9) zur Beleuchtung einer Schleifffläche (4) des Fahrdrahts (2), mit einer Optik (13) zur Abbildung des Fahrdrahts (2) auf eine Sensorvorrichtung (12) und mit einer der Sensorvorrichtung (12) nachgeschalteten Auswerteeinheit (14), durch die aus einer Aufnahme (15, 16) des Fahrdrahts ein Breitenmesswert (sfb) für die Breite der Schleifffläche (4) und aus dem Breitenmesswert (sfb) die Resthöhe (rh) des Fahrdrahts (2) bestimmbar ist,
**dadurch gekennzeichnet, dass**
die Auswerteeinheit (14) zur Korrektur des Breitenmesswerts (sfb) der Schleifffläche (4) mit Hilfe eines vorbestimmten Korrekturwerts (cw) für die Breite seitlicher Ablagerungen (5) am Fahrdraht (2) eingerichtet ist.

10. Vorrichtung nach Anspruch 9,
**dadurch gekennzeichnet, dass**
die Auswerteeinheit (14) zur Korrektur mit einem Korrekturwert (cw) eingerichtet ist, der vom Breitenmesswert (sfb) abhängig ist.

11. Vorrichtung nach Anspruch 9 oder 10,
**dadurch gekennzeichnet, dass**
die Vorrichtung den Fahrdraht (2) seitlich von unten mit Hilfe von wenigstens zwei Lichtquellen (8) beleuchtet und die Flanken (6) und die Schleifffläche (4) des Fahrdrahts (2) mit Hilfe von wenigstens zwei seitlich unterhalb des Fahrdrahts (2) angeordneten Sensoren (12) erfasst.

12. Vorrichtung nach einem der Ansprüche 9 bis 11,
**dadurch gekennzeichnet, dass**
die Höhen- und Seitenlage des Fahrdrahts (2) von der Vorrichtung mit Hilfe von Triangulation erfassbar ist.

13. Vorrichtung zur Bestimmung eines Korrekturwerts (cw) für die Breite seitlicher Ablagerungen (5) an der Schleifffläche (4) eines Fahrdrahts (2) mit einer Lichtquelle (8) zur Beleuchtung der Schleifffläche (4) und einer Flanke (6) des Fahrdrahts (2), mit einer Optik zur Abbildung der Schleifffläche (4) und der Flanke (6) auf eine Sensoreinrichtung (12) und mit einer der Sensoreinrichtung (12) nachgeschalteten Auswerteeinheit (14), durch die aus einer Aufnahme der Schleifffläche (4) und der Flanke (6) des Fahrdrahts (2) ein von der Breite seitlicher Ablagerungen (5) unabhängiger wahrer Resthöhenwert ($rh_t$) bestimmbar ist,
**dadurch gekennzeichnet, dass**
durch die Auswerteeinheit (14) aus dem wahren Resthöhenwert ($rh_t$) ein wahrer Breitenmesswert ($sbf_t$) für die Breite der Schleifffläche (4) errechenbar ist, aus dem durch Vergleich mit einem anhand der Aufnahme der Schleifffläche (4) ermittelten scheinbaren Breitenmesswert (sbf) der Korrekturwert (cw) für die Breite der seitlichen Ablagerungen (5) ermittelbar ist.

14. Vorrichtung nach Anspruch 13,
**dadurch gekennzeichnet, dass**
mit der Vorrichtung eine die Abhängigkeit des Korrekturwerts (cw) von dem Breitenmesswert (sfb) beschreibende Korrekturwertfunktion ermittelbar ist.

15. Vorrichtung nach Anspruch 13 oder 14,
**dadurch gekennzeichnet, dass**
die Auswerteeinheit (14) Messungen an geraden Streckenabschnitten, in denen sich der Fahrdraht (2) in der Nähe der Gleismitte befindet, durchführt.

16. Vorrichtung nach Anspruch 15,
**dadurch gekennzeichnet, dass**
die Auswerteeinheit (14) eine Rillenkorrektur durchführt, indem die Auswerteeinheit (14) einen Flankenmesswert (flmess) auf einen wahren, einem rillenfreien Umriss (19) des Fahrdrahts (2) entsprechenden Flankenwerts (fl) korrigiert.

17. Vorrichtung nach Anspruch 15 oder 16,
**dadurch gekennzeichnet, dass**
die Auswerteeinheit (14) den Korrekturwert (cw) für den Breitenmesswert (sfb) durch Messung an verschiedenen Streckenabschnitten und nachfolgender Mittelung bestimmt.

**18.** Vorrichtung nach einem der Ansprüche 13 bis 17,
**dadurch gekennzeichnet, dass**
die Vorrichtung wenigstens zwei seitlich unterhalb des Fahrdrahts (2) angeordnete Lichtquellen (8) und wenigstens einen seitlich unterhalb des Fahrdrahts (2) angeordnete Sensor (12) aufweist.

**FIG 1**

FIG 2

## FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1315943 B1

- DE 19634060 C1

**In der Beschreibung aufgeführte Nicht-Patentliteratur**

- **VAN GIGCH, J.M.** System zur Messung der Fahrdrahtdicke (ATON) der niederländischen Eisenbahn. *Schienen der Welt,* April 1991, 20-31